Europäisches Patentamt

European Patent Office

Office européen des brevets

(11) Publication number: **0 243 848**
**A1**

## EUROPEAN PATENT APPLICATION

(21) Application number: 87105830.1

(51) Int. Cl.⁴: **B60R 1/06**

(22) Date of filing: 21.04.87

(30) Priority: 29.04.86 IT 6735386
06.03.87 IT 5310387 U

(43) Date of publication of application:
04.11.87 Bulletin 87/45

(84) Designated Contracting States:
DE ES FR

(71) Applicant: FOGGINI PROGETTI S.r.l.
Via Aosta, 17
I-10092 Beinasco Torino(IT)

(72) Inventor: Foggini, Paolo
Strada Moncalieri 2
I-10020 Revigliasco (Torino)(IT)

(74) Representative: Modiano, Guido et al
MODIANO, JOSIF, PISANTY & STAUB
Modiano & Associati Via Meravigli, 16
I-20123 Milan(IT)

(54) External, remotely controlled rear-view mirror for automotive vehicles.

(57) An external rear-view mirror for automotive vehicles comprises a rigid hollow shell (10) accommodating an orientable reflecting surface (19) and an actuation device for allowing remotely controlled orientation of the reflecting surface. This device comprising a first motor shaft (120) which operates a corresponding first mechanism (121) causing the oscillation of a plate (133) supporting the reflecting surface (19) around a first orientation axis (10); a second driven shaft (124) moved by the first one through a pair of reduction gearwheels (126) and operating a corresponding second mechanism (125) causing simultaneous oscillation of said supporting plate (133) around a second orientation axis (V); the oscillations of the plate (133) about the orientation axes (O,V) being of different amplitudes according to the reduction ratio of the gearwheels (126) interposed between the first (120) and the second (124) shafts.

Fig. 6

## EXTERNAL, REMOTELY CONTROLLED REAR-VIEW MIRROR FOR AUTOMOTIVE VEHICLES

The present invention relates to an external, remotely controlled, rear-view mirror for automotive vehicles.

External rear-view mirrors are already known which comprise a rigid shell coupled to the bodywork of the vehicle in a collapsible manner and are provided with a reflecting surface which is rotatable, within the shell, substantially about two mutually perpendicular pivot axes for orientation.

Also known are external rear-view mirrors of the type specified wherein the rotations of the reflecting surface are achieved by means of electromechanical actuators activated from the interior of the automotive vehicle by means of a centralized remote control.

In known rear-view mirrors of this kind, motor reducers are provided, having independent motors, or with a single motor which can be selectively coupled to each reducer by means of an electromagnetic or mechanical coupling. These reducers, by means of suitable transmissions, are intended to separately control swinging of the reflecting surface in the horizontal and respectively in the vertical plane; the amplitude of each oscillation being limited by limit switches of an electromechanical type, as an example by microswitches. This gives rise to a complex and costly structure, which has hitherto significantly limited the diffusion of such rear-view mirrors, which are installed only on automotive vehicles of high prestige. Moreover, the structural complexity of the known solutions reflects in a reduced reliability in operation, and this is a serious disadvantage since, due to the non-reversibility of the actuator on account of the interposition of transmissions with a high ratio of reduction, the manual orientation of the reflecting surface is generally prevented.

The present invention is substantially intended to eliminate the above described disadvantages, and has the important object of providing a rear-view mirror of the type specified. wherein the remotely controlled orientation of the reflecting surface is achieved by means of an actuator device which is extremely simplified and therefore reliable and economically advantageous.

A further important object of the present invention is to provide a rear-view mirror having a reflecting surface control device which can be simply and intuitively operated. also by virtue of the fact that the angular orientation ranges are not limited by stops, thereby further structurally simplifying the remote control.

A further important object of the invention is to provide an external rear-view mirror with an actuator having small dimensions and therefore accommodatable in a containment shell of correspondingly limited dimensions, in particular so as to avoid inducing an excessive and undesirable aerodynamic resistance.

These and other objects are achieved by an external, remotely controlled, rear-view mirror for automotive vehicles, according to the invention. as defined in the appended claims.

The characteristics and advantages of the invention will become apparent from the following detailed description and with reference to the accompanying drawings, given only by way of non-limitative example, where:

Fig. 1 is a front elevation view of the external rear-view mirror according to the invention. in which the reflecting surface is illustrated in partial cross section;

Fig. 2 is a longitudinal cross section view taken along line II-II of Fig. 1; the reflecting surface being here illustrated in its full extension;

Fig. 3 is an enlarged scale cross section view taken along line III-III of Fig. 1;

Fig. 4 is an enlarged scale cross section view taken along line IV-IV of Fig. 1;

Fig. 5 is an enlarged scale cross section view taken along line V-V of Fig. 3;

Fig. 6 is an exploded perspective view of the device according to a different embodiment of the invention;and

Fig. 7 is a similar perspective view of the device according to a further embodiment.

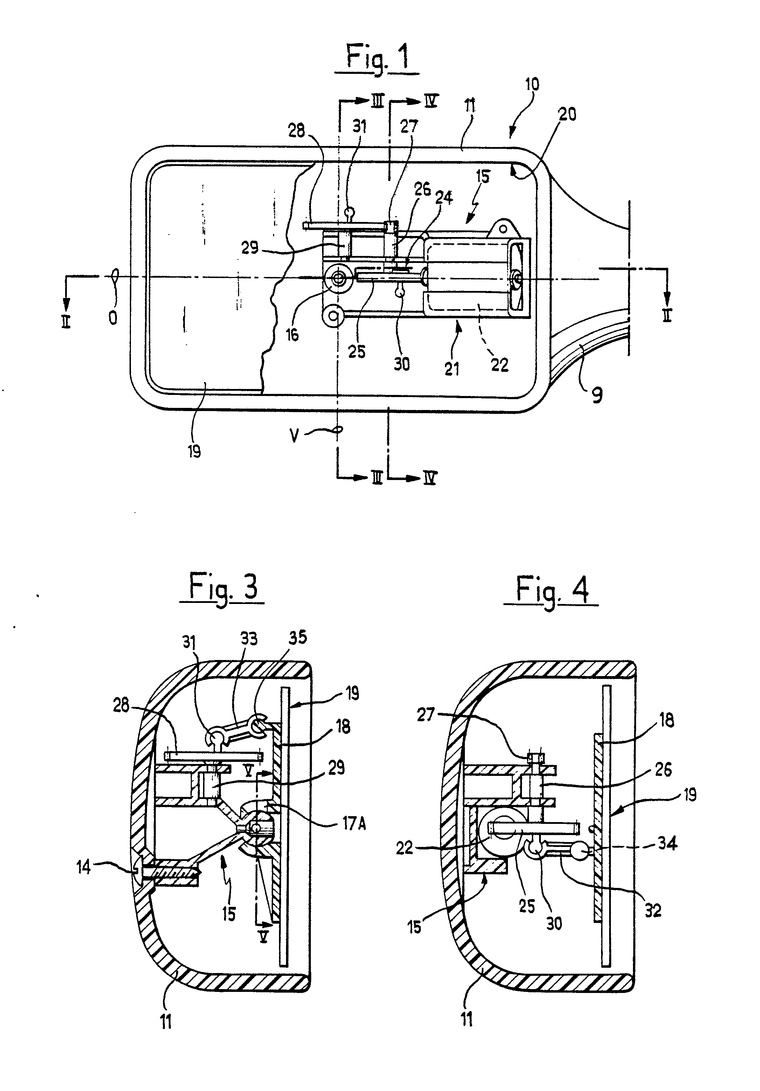

First with reference to Figs. 1 to 5, 10 generally indicates the outer shell of the rear-view mirror, comprising a hollow body 11 and a tubular end portion 9 which, by means of a hinge pivot (not illustrated), is articulated to a supporting base, rigidly coupled to the bodywork of the vehicle.

Inside the hollow body 11, a support 15 of polymeric material is coupled. e.g. by means of screws 14, and is provided with a spherical head 16 for articulation by means of a corresponding spherical seat 17, of a plate 18 rigidly carrying the reflecting surface 19, the perimetral extension of which is slightly smaller than the contour 20 of the cavity of the body 11 as is clearly illustrated in Figure 2.

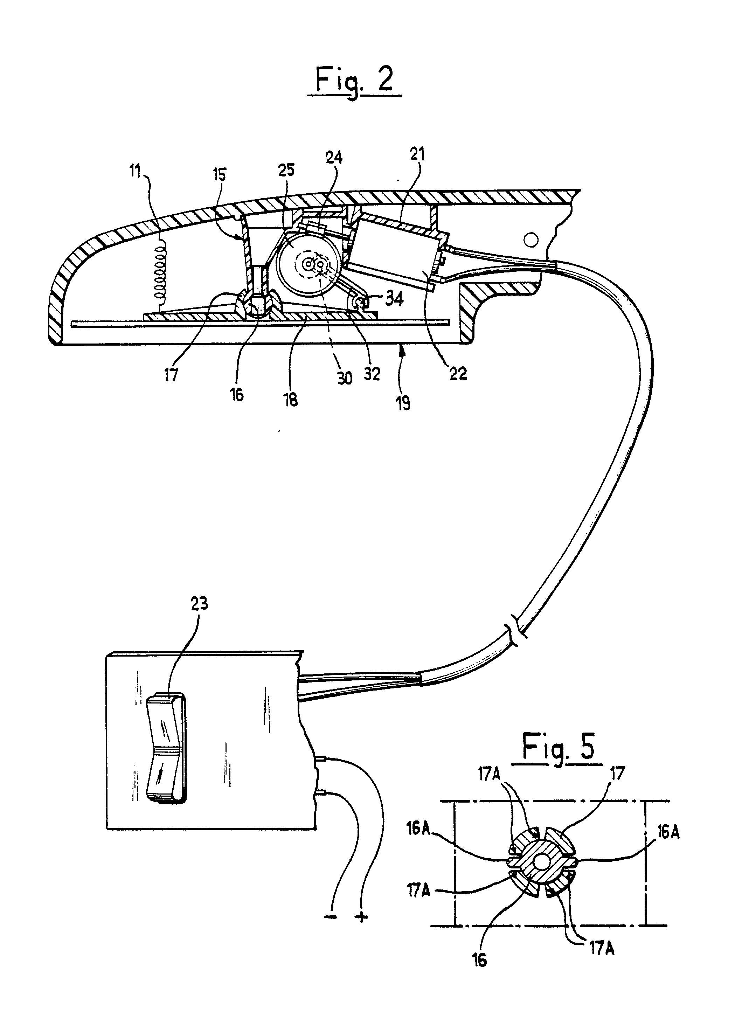

The spherical head 16 is provided with at least one pair of pins 16A engaging complementary slots 17A of the seat 17 (Fig. 5) to allow the joint only two degrees of freedom (eliminating the third) about two respective pivot axes which will be specified hereinafter.

A seat 21 is provided in the support 15 for accommodation and retention of an electric motor 22 of the DC type, preferably of the polarity inversion type, controlled by a power supply switch 23, composed of a swinging switch with central zero. A first endless pinion 24, keyed onto the shaft of the motor 22, engages with a matching helical wheel 25 rigidly coupled to a first motor shaft 26, supported freely rotatable by matching seats of the support 15; the axis of the shaft 26 extending vertically (with reference to Fig. 1).

A second pinion 27, keyed to the free end of the shaft 26, engages with a matching gearwheel 28 parallel to the wheel 25 and also keyed on a second vertical shaft 29 supported freely rotatable by matching seats of the support 15.

As is clearly illustrated in Fig. 1, both wheels 25 and 28 are provided with spherical and eccentric pivots, respectively 30 and 31. The center of the pivot 30 is slightly offset with respect to the horizontal axis O which passes through the spherical head 16; the center of the pivot 31, conversely, is significantly offset from said horizontal axis. Matching small connecting rods 32,33 connect the pivots 30,31 to related spherical head 34 and 35 rigidly coupled to the plate 18 of the reflecting surface 19.

It is easily understood that, by virtue of the arrangement described above, rotation of the motor 22 causes oscillation of the plate 18 around the vertical axis V and, simultaneously, to oscillation of the same plate around the horizontal axis O, both passing through the center of the spherical head 16 (the oscillations with a component around a third axis perpendicular to the plane O-V being prevented by the pins 16A). However, wheels 25 and 28 are driven with significant different ratio of reduction, and in particular wheel 25 is rotated much faster than wheel 28, so as to cause one of the angular movements to be a fraction of the other. In the example illustrated, wherein the wheel 25 causes the angular movement of the reflecting surface around the vertical axis V (by virtue of the position of the pivot 30 with respect to this axis), the angular movement of the reflecting surface with respect to the horizontal axis O (vertical orientation) will be a fraction K of the previous one; e.g. if the transmission ratios are selected so that the second is 20% of the first, every 1° - rotation on the vertical plane corresponds to a 5° - rotation on the horizontal plane. This simultaneous orientation, though particularly advantageous, is not limitative, since the invention provides the possibility of reversal of the transmission ratios to make the rotation around the vertical axis a fraction of the one around the horizontal axis.

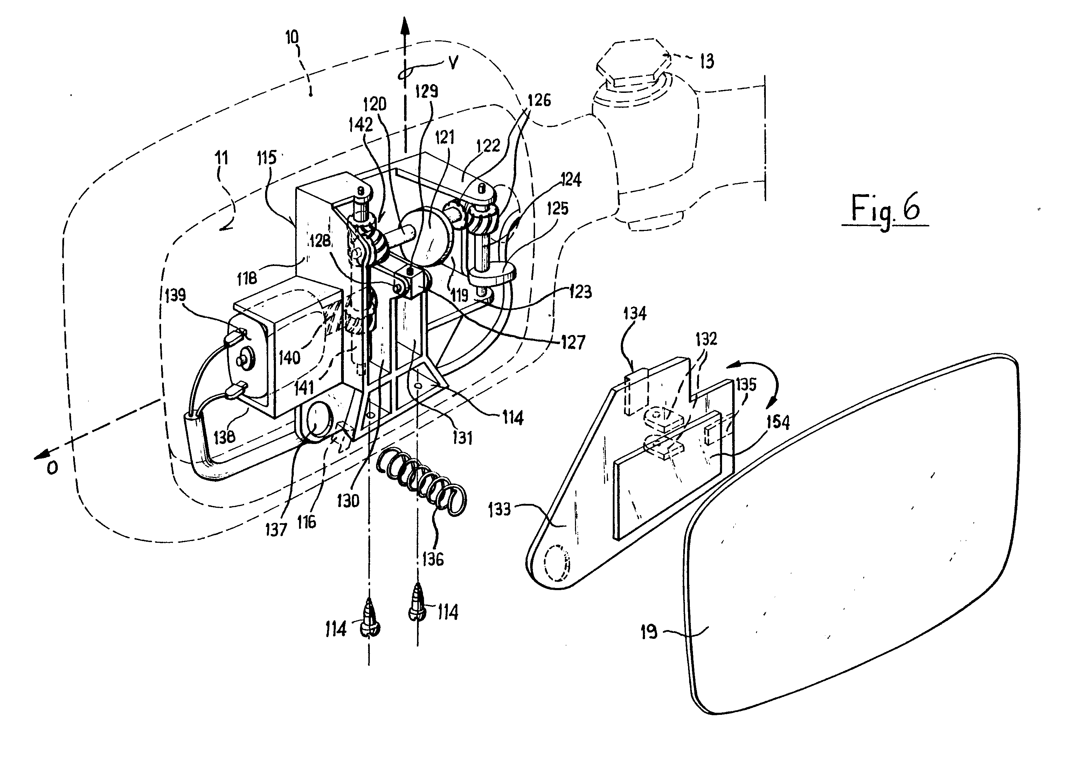

In the varied embodiment of Fig. 6, the mirror comprises a support 115, with a trapezoidal base 114 cooperating with centering and retention guides 116 of the outer shell 10 to which said support is rigidly coupled by means of screws 114.

The support 115 is provided with two opposite walls 118,119 in which first cylindrical seats are provided for supporting, freely rotating therein, the ends of a first shaft 120. On this first shaft a first cam 21 is keyed. The support 115 further comprises a further pair of opposite walls 122,123 arranged perpendicularly to the walls 118,119 and also provided with cylindrical seats for rotatably supporting a second shaft 124 on which a second cam 125 is keyed. Due to the perpendicular arrangement of the supporting walls, the shafts 120 and 124 are also mutually perpendicular and, by means of a reduction transmission 126, advantageously composed of a helical wheel-screw pair, these shafts are furthermore mechanically coupled, so that rotation of the first shaft is transmitted to the second with a preset reduction ratio. In the central region of the support 115, a joint 127 with perpendicular axes is supported in a freely oscillable way and is provided with a first pair of pivots 128 arranged parallel to the first shaft 120 and with a second pair of pivots 129 arranged parallel to the second shaft 124.

The pivots 128 engage with corresponding seats provided on a pair of opposite walls 130,131 of the support 115; the pivots 129 engage with corresponding seats of a fork member 132 formed on a plate 133 rigidly connected to the reflecting surface 19 (as an example, by means of a portion of double-adhesive tape 154).

The plate 133 is provided, on its side facing the device body 11 with two raised portions 134,135 on which the cam 121 and respectively the cam 125 act. The perpendicular rotation axes defined by the pins 128,129 of the joint 127 are offset from the correspondent parallel axes of the shafts 120,124 so that the action exerted by the cams 121,125 on the raised portions 134,135 of the plate 133 generates respective oscillation torques of the plate around the oscillation axes of the joint 127. A spring 136, having an end accommodated in a notch 137 of the support 115, acts with the other end on the plate 133 and more precisely in a point of the plate arranged with respect to the axes of the joint 127 so as to create respective elastic torques in antagonism to the oscillation torques generated by the cams 121,125; these antagonist elastic torques being suitable to ensure the mutual contact coupling between the cams and the respective portions 134,135 of the plate 133.

An electric motor 139 is accommodated in a suitable seat 138 of the support 115 and, by means of a pair of reduction gears 140 - preferably of the helical screw-wheel type - controls a transmission shaft 141 which in turn, by means of a reduction pair 142, drives the first shaft 120.

The arrangement is such that by feeding the motor 139, both cams 121,125 are rotated so as to cause oscillation -in a preset ratio - of the reflecting surface around the two mutually perpendicular orientation axes defined by the joint 127.

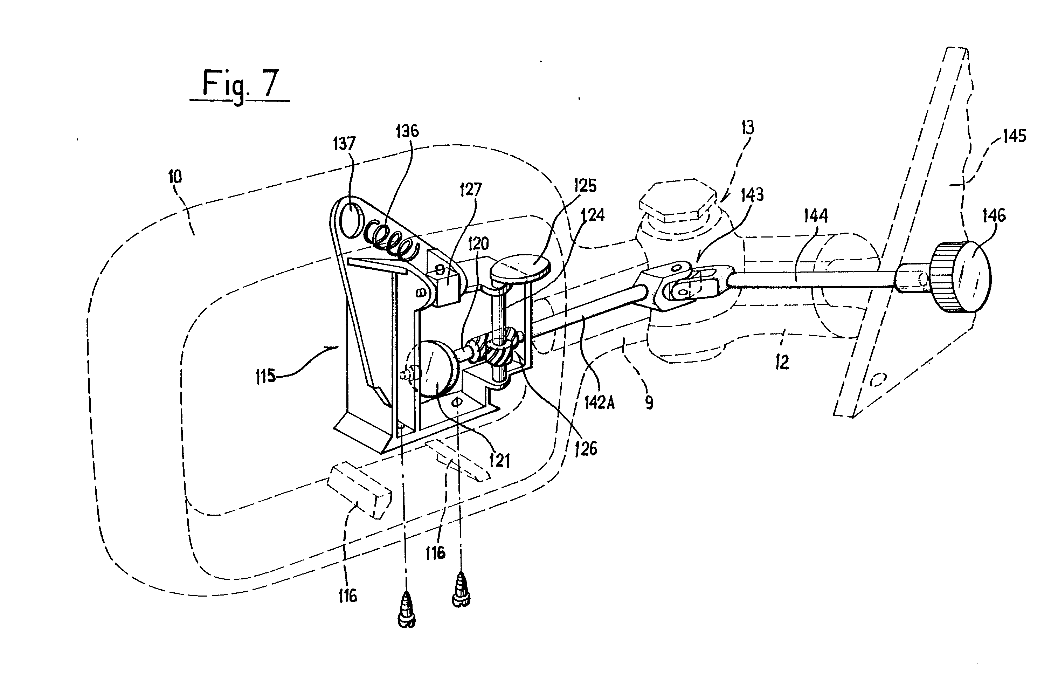

The embodiment of Fig. 7 relates to a solution with manual control. According to this embodiment, the device differs from the one described with reference to Fig. 6 in that the first shaft 120 extends to a transmission shaft 142A which protrudes from the support 115 into the tubular portion 9 of the outer shell 10 and, through a Cardan joint 143 and a second transmission 144, extends in a hollow stem 12 up to and through a mirror support wall 145, formed by the automotive vehicle body, penetrating, with its free end, inside the vehicle. This free end is provided with a control knob 146, the rotation whereof produces the oscillation of the reflecting surface 19 as described above.

It can be furthermore seen that in the embodiment according to Fig. 7, the first shaft 120 is arranged below the joint 127 and that therefore the antagonist spring 136 is arranged above this joint to provide the required elastic contrast torques.

As is clearly illustrated in the figure, the joint 143 of the transmission shaft is arranged at the articulation 13 between the tubular portion 9 of the shell 10 and the respective coupling stem 12, thus, on one hand, facilitating the assembly and, on the other, keeping the force required to operate the control unchanged for any orientation of the shell with respect to the stem.

## Claims

1. An external rear-view mirror for automotive vehicles, comprising a rigid hollow shell (10) in which an orientable reflecting surface (19) is accommodated, and including an actuation device for remotely controlling the reflecting surface, characterized in that said actuation device comprises a first motor shaft (26;120) which operates a first mechanism (30,32,34;121,134) controlling oscillation of a plate (18;133) supporting the reflecting surface (19) around a first orientation axis (V); a second driven shaft (29;124) moved by said first shaft through transmission gears (27,28;126) for operating a corresponding second mechanism (31,33,35;125,135) controlling a simultaneous oscillation of said supporting plate (18;133) around a second orientation axis (O); the oscillations of said supporting plate (18;133) around said orientation axes (O.V) being of different amplitudes according to the transmission ratio of said transmission gears (27,28;126) interposed between said first and second shafts.

2. A mirror according to claim 1, characterized in that said orientation axes (O.V) of said reflecting surface (19) are mutually perpendicular and respectively parallel to the horizontal and to the vertical direction.

3. A mirror according to claims 1 and 2, characterized in that the transmission ratio of said transmission gears (27,28;126) is selected so that the angular swinging movement of the reflecting surface (19) around one orientation axis is a fraction of the corresponding angular swinging movement of said surface around the other orientation axis, and in that said fraction is comprised between 10% and 25%.

4. A mirror according to claim 3, characterized in that the fractioned angular swinging movement occurs about a horizontal axis (O-vertical orientation).

5. A mirror according to the preceding claims, characterized in that it comprises, rigidly coupled to the interior of the cavity of said shell (10), a support (15) with a spherical pivoting head (16) for a plate (18) supporting the reflecting surface (19); a single electric motor (22) accommodated in a seat (21) of said support (15), a first helical gearwheel (25), rigidly coupled to a first shaft (26) and meshing with a pinion (24) keyed to the motor shaft, a second gearwheel (28), rigidly coupled to a second shaft (29) and meshing with a pinion (27) rigidly coupled to the first shaft (26), a first and a second connecting rod (32,33) articulated with an end thereof to the first and respectively to the second gearwheel (25,28) and with the other end to the supporting plate (18) of the reflecting surface (19) to produce oscillation of said supporting plate (18) respectively about said first and said second orientation axes.

6. A mirror according to claim 5, characterized in that said first and second gearwheels (25,28) are arranged on parallel planes and are provided each with a spherical pivot (30,31) for articulation of an end of the respective connecting rod (32,33); each wheel and each connecting rod constituting a cyclic crank.

7. A mirror according to claims 1 to 4, characterized in that it comprises a first motor shaft (120) carrying a first cam (121) which acts in sliding contact engagement on the supporting plate (133); a second shaft (124), perpendicular to and operated by the first shaft (120) through reduction gears (126), said second shaft carrying a second cam (125), also acting in sliding contact engagement on said supporting plate (133); said supporting plate (133) being supported, through a joint (127) of the type with perpendicular axes, by a rigid support (115) and being rotated by said cams (121,125) acting eccentrically to said joint (127) on different points (134,135) of the same supporting plate, said points being arranged so as to produce simultaneous oscillations of the supporting plate, against elastic means (136), with different amplitude and about respective mutually perpendicular orientation axes.

8. A mirror according to claim 7, characterized in that said first and second cams (121,125) act on respective raised portions (134,135) of the supporting plate (133) and the perpendicular axes of the joint (127) are respectively parallel to, but offset from, said first and second shaft (120,124), thereby the action exerted by the cams on the respective raised portions of the supporting plate generate respective oscillation torques of said supporting plate about the axes of said joint element (127).

9. A mirror according to claims 7 and 8, characterized in that said elastic means (136) comprises a spring having one end accommodated in a notch (137) of said rigid support (115) and with the other end acting on a point of said supporting plate (133) selected with respect to the joint (127), so as to create respective elastic torques in contrast with the oscillation torques generated by the cams (121,125).

10. A mirror according to claims 7 to 9, characterized in that said first shaft (120) is rigidly connected with an end thereof to transmission shaft (142A,144) comprising at least one Cardan joint (143) and provided, at the end opposite to the one rigidly coupled to the first shaft (120), with an operating knob (146).

11. A mirror according to claim 10, characterized in that the transmission shaft comprises shaft portions (142A,144) coupled by said Cardan joint (143) and extending respectively in an end portion 9 of the shell (10) and in a supporting stem (12) and in that the Cardan joint (143) is positioned at the articulation (13) between the end portion (9) and the stem (12).

0 243 848

Fig. 1

Fig. 3

Fig. 4

## Fig. 2

## Fig. 5

Fig. 6

0 243 848

# Fig. 7

0 243 848

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-3 311 229 (VDO)<br>* page 9, lines 1-20 * | 1-4 | B 60 R 1/06 |
| A | | 5 | |
| A | US-A-4 171 873 (REPAY et al.)<br>* figures 1, 3 * | 5,6 | |
| A | DE-A-2 460 076 (BÜCKER et al.)<br>* figure 1 * | 7-9 | |
| A | EP-A-0 064 815 (BRITAX)<br>* claim 4 * | 10,11 | |

TECHNICAL FIELDS SEARCHED (Int. Cl.4)

B 60 R 1/00

The present search report has been drawn up for all claims

| Place of search | Date of completion of the search | Examiner |
|---|---|---|
| BERLIN | 16-07-1987 | STANDRING M A |